Europäisches Patentamt

European Patent Office

Office européen des brevets

(19)

‖‖‖‖‖‖‖‖‖‖‖‖‖‖‖‖‖‖‖‖‖‖‖‖‖‖‖‖‖‖‖‖

(11) Numéro de publication : **0 360 690 B1**

(12) # FASCICULE DE BREVET EUROPEEN

(45) Date de publication du fascicule du brevet :
**10.06.92 Bulletin 92/24**

(51) Int. Cl.$^5$ : **F16L 19/02, F16L 17/08**

(21) Numéro de dépôt : **89402577.4**

(22) Date de dépôt : **20.09.89**

(54) **Dispositif de raccordement et d'étanchéité à raccord à lèvre métallique.**

(30) Priorité : **21.09.88 FR 8812341**

(43) Date de publication de la demande :
**28.03.90 Bulletin 90/13**

(45) Mention de la délivrance du brevet :
**10.06.92 Bulletin 92/24**

(84) Etats contractants désignés :
**BE CH DE GB IT LI NL SE**

(56) Documents cités :
**FR-A- 1 222 943**
**FR-A- 1 373 072**
**FR-A- 2 107 414**
**US-A- 3 142 498**
**US-A- 4 597 596**

(73) Titulaire : **SOCIETE EUROPEENNE DE PROPULSION**
**24 rue Simon de Rothschild**
**F-92150 Suresnes (FR)**

(72) Inventeur : **Froget, Guy**
**43 Rue Claude Monet**
**F-27200 Vernon (FR)**
Inventeur : **Burgnies, Philippe**
**1 Allée des Bouches Manons**
**F-27200 Vernon (FR)**

(74) Mandataire : **Thévenet, Jean-Bruno et al**
**Cabinet BEAU DE LOMENIE 55 rue d'Amsterdam**
**F-75008 Paris (FR)**

EP 0 360 690 B1

Jouve, 18, rue Saint-Denis, 75001 PARIS

## Description

La présente invention a pour objet un dispositif de raccordement et d'étanchéité à raccord à lèvre métallique pour raccorder des premier et second éléments de tuyauterie comprenant un premier élément de raccord métallique rendu solidaire du premier élément de tuyauterie et muni d'un filetage coopérant avec le filetage d'un écrou de serrage lui-même muni d'un épaulement, et un second élément de raccord métallique rendu solidaire du second élément de tuyauterie, muni extérieurement d'un épaulement sur lequel vient porter l'épaulement correspondant de l'écrou de serrage, l'un des premier et second éléments de raccord présentant une lèvre élastique coopérant avec une face frontale réalisée sur l'autre des premier et second éléments de raccord.

On connait plusieurs types de raccords de tuyauteries. Un exemple de raccord est donné par le document FR-A-2 196 053 qui décrit un assemblage dans lequel une extrémité d'un tuyau est fixée à un embout muni d'un épaulement et d'une surface semi-sphérique, l'extrémité du second tuyau étant pourvue d'un filetage extérieur coopérant avec un écrou de serrage de l'ensemble des pièces. Cet ensemble vissé réalise à la fois des fonctions d'étanchéité et de raccordement ce qui peut créer des problèmes notamment en cas de pression élevée à l'intérieur de la tuyauterie.

Selon un autre type de raccord de tuyauteries, tel que décrit par exemple dans le document FR-A-2 284 079, il est prévu une déformation de chacune des extrémités des tuyaux avec formation d'une bride sur l'extrémité mâle, et d'un évasement fileté extérieurement pour l'embout femelle. Ces extrémités sont raccordées par un écrou avec interposition préalable d'un joint d'étanchéité annulaire. Ce raccord, bien qu'il dissocie les fonctions d'étanchéité et de raccordement, ne s'applique pas aux tuyauteries utilisées pour le transport de fluides ou de gaz à haute pression, haute température ou température cryotechnique (hydrogène) ou encore dans des conditions sévères de fonctionnement par exemple du point de vue vibratoire.

D'autres types de raccords métalliques vissés sont connus par exemple par le brevet FR-A-2 107 414. Dans ce type de raccord, l'élément d'étanchéité n'est toutefois pas en contact direct avec l'intérieur de la tuyauterie et le raccord est de réalisation complexe.

On connait encore, notamment par le document US-A-3 142 498 un raccord à lèvre dans lequel l'extrémité de l'une des tuyauteries à assembler présente une lèvre formant joint d'étanchéité. Dans ce cas, la lèvre est réalisée directement dans la partie terminale d'une tuyauterie et par suite présente une élasticité ou une résistance mécanique réduites compte tenu du fait que la lèvre doit obligatoirement être réalisée dans le même matériau que la tuyauterie.

Le document US-A-4 597 596 montre un manchon métallique formant joint en alliage de haute qualité qui est fixé à l'extrémité de l'un des tubes à raccorder, par exemple par soudage et est lui-même réalisé d'une seule pièce. L'élasticité du manchon métallique formant joint peut être assez grande, mais la nécessité de fixer le manchon par une soudure unique dans une zone de la tuyauterie susceptible d'être soumise notamment à des vibrations restreint la gamme des matériaux utilisables pour réaliser le joint ou rend l'assemblage fragile.

On a encore proposé d'utiliser un raccord à lèvre réalisé en un alliage de haute performance et rapporté sur un élément de tuyauterie par dudgeonnage. Toutefois, dans ce cas, la liaison par dudgeonnage limite fortement la tenue aux vibrations de l'ensemble du raccord.

Ainsi, les différents raccords connus ne se sont pas révélés adaptés à des environnements difficiles, c'est-à-dire des environnements dans lesquels les vibrations sont importantes, ou les températures sont élevées ou encore l'accessibilité est difficile pour procéder à des changements de joints, ce qui exige une longévité très grande des éléments de raccordement.

L'invention vise à remédier aux inconvénients précités et à réaliser un raccord à haute performance en milieu hostile, en particulier en milieu fortement vibré et à haute température.

L'invention a encore pour but de réaliser un raccord auto-freinant, dans lequel l'effet de pression augmente l'étanchéité.

Enfin, le raccord selon l'invention vise à autoriser un léger désalignement des tuyauteries raccordées.

Ces buts sont atteints grâce à un dispositif de raccordement du type défini en tête de la description, caractérisé en ce que l'élément présentant une lèvre élastique comprend un élément d'ajutage en un métal ou alliage métallique présentant une compatibilité du point de vue soudure avec le matériau de l'élément de tuyauterie auquel il est raccordé par soudage et coopérant avec l'écrou de serrage, et une pièce d'extrémité présentant en demi-coupe axiale la forme d'un V couché pour définir ladite lèvre élastique, ladite pièce d'extrémité étant réalisée en un matériau différent de celui de l'élément d'ajutage pour présenter des caractéristiques mécaniques améliorées conférant l'élasticité nécessaire au raccord, et étant rendue solidaire de l'extrémité libre de l'élément d'ajutage par soudure par diffusion.

Selon un mode de réalisation plus particulier, la lèvre élastique est réalisée sur le second élément de raccord et l'élément d'ajutage présente à sa partie terminale sur laquelle est rapportée la pièce d'extrémité un collet définissant l'épaulement coopérant avec l'épaulement de l'écrou de serrage qui assure ainsi une compression de la liaison entre l'élément d'ajutage et la pièce d'extrémité, cette compression étant sans effet sur la déformation de la lèvre qui ne dépend que du raccord.

La pièce d'extrémité est rendue solidaire de l'élément d'ajutage par assemblage bimétallique, tel que la soudure FE, la soudure TIG, la soudure par diffusion par compression isostatique à chaud, la soudure par friction, la brasure, les éléments du dispositif étant disposés de manière à comprimer ladite soudure entre la pièce d'extrémité et l'élément d'ajutage ce qui accroît la fiabilité de l'ensemble.

Avantageusement, ladite face frontale coopérant avec la lèvre métallique élastique présente une forme tronconique à angle très ouvert et la lèvre métallique élastique présente elle-même une face extérieure de forme tronconique correspondante à angle très ouvert pour assurer une surface de contact importante et permettre un léger désalignement des deux éléments de tuyauterie, le cône de grand angle étant assimilable localement à une sphère de grand rayon.

Toutefois, ladite face frontale coopérant avec la lèvre métallique élastique peut également présenter une forme sphérique.

A titre d'exemple, la pièce d'extrémité est réalisée en un alliage à hautes caractéristiques mécaniques tel que notamment l'alliage NC 19 FeNb connu sous la dénomination Inconel 718.

L'élément d'ajutage peut être réalisé en acier inoxydable à basse teneur en carbone tel que notamment l'acier inoxydable Z2CN18-10.

L'écrou de serrage et le premier élément de raccord métallique peuvent être réalisés en un alliage métallique à bonnes caractéristiques mécaniques tel que notamment l'acier inoxydable EZ6NCT 25-15.

Le raccord à lèvre selon l'invention est compatible avec un grand nombre de fluides tels que l'azote liquide ou gazeux, l'hélium gazeux, l'hydrogène liquide ou gazeux, l'oxygène liquide ou gazeux, le peroxyde d'azote, la dimethylhydrazine dissymétrique, l'eau. Le raccord à lèvre selon l'invention est par ailleurs conçu pour assurer une étanchéité au moins dans une gamme de pression allant de 0 bar à 300 bar et au moins dans une plage de température allant de 20°K à 980° K.

D'autres caractéristiques, avantages et détails de l'invention seront mieux compris grâce à la description suivante de modes particuliers de réalisation, faite en référence aux dessins annexés sur lesquels :

     – la figure 1 est une vue en demi-coupe axiale d'un premier mode de réalisation selon l'invention,

     – la figure 2 est une vue en demi-coupe axiale d'un second mode de réalisation conforme à l'invention.

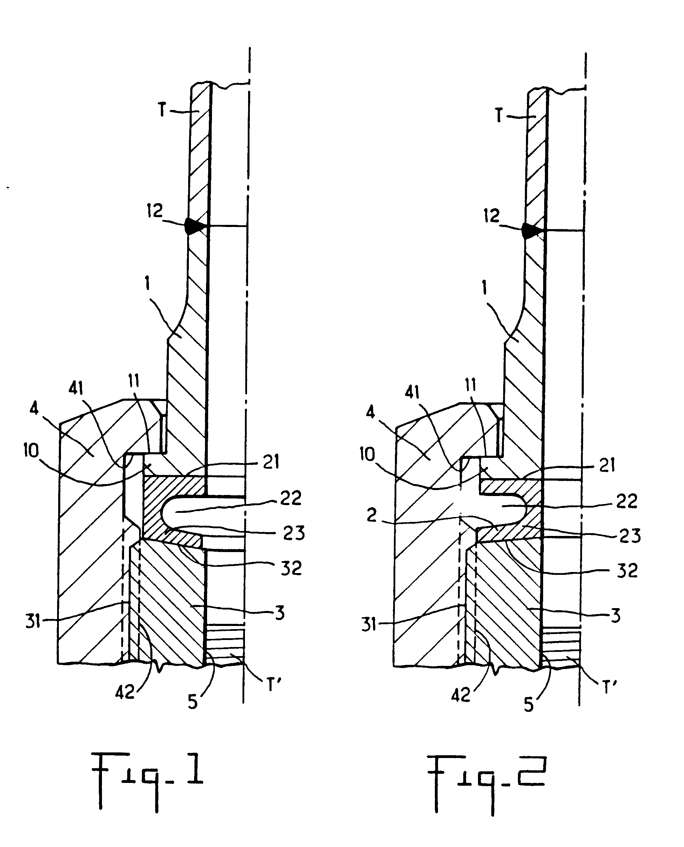

La figure 1 montre un premier exemple de dispositif à raccord à lèvre conforme à l'invention, et qui comprend un élément d'ajutage 1 tubulaire de même diamètre intérieur et en un même matériau que l'élément de tuyauterie T auquel il est soudé en 12 par une soudure homogène réalisée de façon classique. Cet élément d'ajutage 1 présente, à son extrémité opposée à la tuyauterie T, un collet d'appui 10 coopérant par sa face 11 avec un épaulement 41 d'un écrou de serrage 4. Le matériau de l'élément d'ajutage 1 peut ne pas être strictement le même que le matériau de l'élément de tuyauterie T mais doit être compatible avec ce dernier au point de vue soudure.

Une pièce d'extrémité 2 présentant une lèvre élastique 23 est soudée par diffusion sur l'extrémité libre de l'élément d'ajutage 1. Une soudure bi-métallique 21 est icinécessaire car la pièce d'extrémité 2 présentant la lèvre 23 est constituée d'un matériau à hautes caractéristiques mécaniques tel que l'alliage NC19FeNb connu sous la dénomination Inconel 718, tandis que les éléments de tuyauterie T, T′ et l'élément d'ajutage 1 peuvent être réalisés en un acier inoxydable à bas carbone tel que le Z2CN18-10 par exemple. La pièce d'extrémité 2 présente, en demi-coupe axiale, la forme d'un U couché et présente de ce fait un évidement 22. Selon le premier mode de réalisation de l'invention (figure 1), cet évidement est tourné vers l'intérieur de la tuyauterie. Cette disposition convient plutôt aux grandes sections internes de tuyauterie de l'ordre de quelques millimètres, ainsi qu'aux cas où la pression interne de la tuyauterie est supérieure à la pression externe, le système étant alors auto-serrant pour la lèvre du joint. Par sa branche définissant la lèvre élastique 23 la pièce d'extrémité 2 est appuyée contre une surface frontale d'extrémité 32 d'une pièce d'accouplement 3 raccordée à l'élément de tuyauterie T′ par exemple par un filetage ou un taraudage 5 et pouvant constituer une pièce union mâle d'un raccord de type Union. La surface de contact 32 de la pièce 3 est tronconique avec un angle très ouvert; mais il est envisageable d'avoir une surface frontale 32 sphérique.

La pièce d'accouplement 3 est un élément métallique intermédiaire entre la lèvre élastique 23 et la seconde partie de la tuyauterie T′ et possède sur sa face extérieure un filetage 31 qui coopère avec le filetage 42 d'un écrou de serrage 4 dont l'épaulement 41 est en appui sur le collet 10 de l'élément d'ajutage 1. Ceci permet de réaliser une compression de la lèvre élastique 23 et maintient également le plan de joint 21 dans une zone de compression.

Pour des tuyauteries présentant des sections internes relativement faibles, de l'ordre du millimètre, ou encore lorsque la pression externe à la tuyauterie est supérieure à la pression interne, on adopte de préférence la configuration de la figure 2 quine diffère de celle de la figure 1 que par l'orientation de la lèvre 23. L'évidement 22 n'est plus tourné vers l'intérieur de la tuyauterie mais vers l'extérieur. Cette figure 2 ne sera pas décrite plus en détail, les mêmes éléments portant les mêmes numéros que sur la figure 1. On notera que lorsque la pression externe à la tuyauterie est supérieure à la pression interne, le système est auto-serrant pour la lèvre du joint.

Les deux exemples de réalisation conformes à l'invention qui viennent d'être expliqués présentent divers avantages. Ainsi, une étanchéité efficace peut être obtenue grâce à l'appui de la lèvre élastique 23 sur une surface conique 32 ou encore sphérique, ce qui rend le système "auto-serrant".

L'assemblage entre la lèvre élastique 23 et l'élément d'ajutage 1 assuré par une soudure bi-métallique 21 obtenue par diffusion est réalisé dans une zone comprimée mécaniquement par le serrage de l'écrou 4 entre les parties mâle 3 et femelle 1, 2 du raccord, ce qui garantit une bonne tenue mécanique de la liaison 21 même dans un environnement à fortes vibrations.

Une soudure homogène 12 est réalisée entre la tuyauterie T et l'élément d'ajutage 1 dans une zone éloignée du raccord qui est soumise aux vibrations. La réalisation d'une telle soudure homogène classique est facile et présente une bonne résistance mécanique, ce qui ne serait pas le cas d'une soudure par diffusion réalisée dans cette zone travaillante, ou d'une liaison par dudgeonnage.

Dans le dispositif selon l'invention, il existe une dissociation des fonctions étanchéité et raccordement, d'où une meilleure performance en vibrations. Enfin, un léger désalignement de la tuyauterie, de l'ordre de 2 à 3°, est permis, grâce à la mise en oeuvre d'un raccord à lèvre.

D'une manière générale, le raccord selon l'invention est d'une pose facile, par soudure classique 12 de raccordement à la tuyauterie T et il s'avère d'une grande fiabilité dûe notamment au fait que la soudure par diffusion 21 est comprimée par le serrage de l'écrou 4. Ainsi, le raccord peut présenter une bonne tenue mécanique pour des niveaux de vibrations très élevés, et présente également une excellente tenue pour des températures extrêmes par exemple de l'ordre de 20°K à 1000°K. Par ailleurs, les fortes pressions des fluides à l'intérieur des tuyauteries tendent à augmenter l'étanchéité par un contact plus intime de la lèvre 23 avec la surface de contact 32.

Diverses variantes de réalisation du dispositif de raccordement et d'étanchéité selon l'invention peuvent être envisagées. Ainsi, le filetage 31 coopérant avec le filetage 42 de l'écrou 4 pourrait être réalisé sur la surface externe de l'élément d'ajutage 1 et dans ce cas, l'épaulement 41 de l'écrou 4 coopérerait avec un collet ménagé sur l'élément de raccord 3, d'une manière analogue à par exemple la configuration de la figure 1 du brevet US 3 142 498. La liaison 21 entre l'élément d'ajutage 1 en matériau semblable à celui de la tuyauterie T et la pièce d'extrémité 2 serait alors également située dans une zone de compression de l'écrou 4 (placé dans une position inversée par rapport à celle des figures 1 et 2 de la présente demande) entre l'épaulement 41 et le filetage 42.

De même le filetage 31 de l'élément de raccord 3 pourrait être un filetage interne réalisé sur un prolongement de l'élément 3 autour de la pièce d'extrémité 2, et coopérant avec un filetage externe réalisé sur l'écrou 4, comme selon le mode de réalisation du raccord à joint torique du document FR-A-2 196 053 par exemple.

La réalisation du dispositif selon les figures 1 et 2 de la présente demande est particulièrement simple. En particulier, lors de la fabrication d'un dispositif selon l'invention la pièce d'extrémité 2 est rendue solidaire de l'élément d'ajutage 1 par soudure bimétallique par diffusion, à l'aide d'un procédé de compression isostatique à chaud.

Les divers éléments du dispositif de raccordement sont par ailleurs disposés de manière à comprimer ladite soudure entre la pièce d'extrémité 2 et l'élément d'ajutage 1, ce qui accroît la fiabilité de l'ensemble.

## Revendications

1. Dispositif de raccordement et d'étanchéité à raccord à lèvre métallique pour raccorder des premier et second éléments de tuyauterie (T, T'), comprenant un premier élément de raccord métallique (3) rendu solidaire du premier élément de tuyauterie (T') et muni d'un filetage (31) coopérant avec le filetage (42) d'un écrou de serrage (4) lui-même muni d'un épaulement (41), et un second élément de raccord métallique (1,2) rendu solidaire du second élément de tuyauterie (T), muni extérieurement d'un épaulement (11) sur lequel vient porter l'épaulement correspondant (41) de l'écrou de serrage (4), l'un (1,2) des premier et second éléments de raccord (1, 2; 3) présentant une lèvre élastique (23) coopérant avec une face frontale (32) réalisée sur l'autre (3) des premier et second éléments de raccord (1,2;3), caractérisé en ce que l'élément (1, 2) présentant une lèvre élastique (23) comprend un élément d'ajutage (1) en un métal ou alliage métallique présentant une compatibilité du point de vue soudure avec le matériau de l'élément de tuyauterie (T) auquel il est raccordé par soudage (12) et coopérant avec l'écrou de serrage (4), et une pièce d'extrémité (2) présentant en demi-coupe axiale la forme d'un V couché pour définir ladite lèvre élastique (23), ladite pièce d'extrémité (2) étant réalisée en un matériau différent de celui de l'élément d'ajutage (1) pour présenter des caractéristiques mécaniques améliorées conférant l'élasticité nécessaire au raccord, et étant rendue solidaire de l'extrémité libre de l'élément d'ajutage (1) par soudure par diffusion.

2. Dispositif selon la revendication 1, caractérisé en ce que la lèvre élastique (23) est réalisée sur le second élément de raccord (1, 2) et en ce que l'élément d'ajutage (1) présente à sa partie terminale sur laquelle est rapportée la pièce d'extrémité (2) un collet (10) définissant l'épaulement (11) coopérant avec l'épaulement (41) de l'écrou de serrage (4) qui assure ainsi une compression de la liaison (21) entre l'élément d'ajutage (1) et la pièce d'extrémité (2), cette compression étant sans effet sur la déformation de la lèvre (23) quine dépend que du raccord.

3. Dispositif selon la revendication 1 ou la revendication 2, caractérisé en ce que la pièce d'extrémité (2) est rendue solidaire de l'élément d'ajutage (1) par assemblage bimétallique à l'aide d'un procédé tel que la soudure à l'arc avec électrode de tungstène avec protection par un gaz inerte (procédé TIG),la soudure par diffusion par compression isostatique à chaud, la soudure par friction, la brasure, les éléments du dispositif étant disposés de manière à comprimer ladite soudure entre la pièce d'extrémité (2) et l'élément d'ajutage (1).

4. Dispositif selon l'une quelconque des revendications 1 à 3, caractérisé en ce que ladite face frontale (32) coopérant avec la lèvre métallique élastique (23) présente une forme tronconique à angle très ouvert et en ce que la lèvre métallique élastique (23) présente elle-même une face extérieure de forme tronconique correspondante à angle très ouvert pour assurer une surface de contact importante et permettre un léger désalignement des deux éléments de tuyauterie.

5. Dispositif selon l'une quelconque des revendications 1 à 3, caractérisé en ce que ladite face frontale (32) coopérant avec la lèvre métallique élastique (23) présente une forme sphérique.

6. Dispositif selon l'une quelconque des revendications 1 à 5, caractérisé en ce que la pièce d'extrémité (2) est réalisée en un alliage à hautes caractéristiques mécaniques.

7. Dispositif selon l'une quelconque des revendications 1 à 6, caractérisé en ce que l'élément d'ajutage (1) réalisé en acier inoxydable à basse teneur en carbone.

8. Dispositif selon l'une quelconque des revendications 1 à 7, caractérisé en ce que l'écrou de serrage (4) et le premier élément de raccord métallique (3) sont réalisés en un alliage métallique à bonnes caractéristiques mécaniques.

9. Dispositif selon l'une quelconque des revendications 1 à 8, caractérisé en ce que la pièce d'extrémité (2) présente un évidement (22) tourné vers l'intérieur de la tuyauterie pour définir la lèvre élastique (23), le système étant auto-serrant lorsque la pression interne est supérieure à la pression externe.

10. Dispositif selon l'une quelconque des revendications 1 à 8, caractérisé en ce que la pièce d'extrémité (2) présente un évidement (22) tourné vers l'extérieur de la tuyauterie pour définir la lèvre élastique (23), le système étant auto-serrant lorsque la pression externe est supérieure à la pression interne.

11. Dispositif selon la revendication 6, caractérisé en ce que l'alliage à hautes caractéristiques mécaniques est l'alliage NC 19 FeNb.

12. Dispositif selon la revendication 7, caractérisé en ce que l'acier inoxydable à basse teneur en carbone est l'acier inoxydable Z2CN18-10.

13. Dispositif selon la revendication 8, caractérisé en ce que l'alliage métallique à bonnes caractéristiques mécaniques est l'acier inoxydable EZ6NCT 25-15.

**Patentansprüche**

1. Kupplungs- und Dichtvorrichtung mit Metallippe zum Anschluß eines ersten und eines zweiten Rohrleitungsstücks (T, T'), umfassend ein erstes Metallanschlußstück (3), das mit dem ersten Rohrleitungsstück (T') ein zusammenhängendes Stück bildet und mit einem Gewinde (31) versehen ist, das in das Gewinde (42) einer Stellmutter (4) paßt, die ihrerseits einen Vorsprung (41) aufweist, sowie ein zweites Metallanschlußstück (1,2), das mit dem zweiten Rohrleitungsstück (T) ein zusammenhängendes Stück bildet und außen einen Vorsprung (11) aufweist, auf den der entsprechende Vorsprung (41) der Stellmutter (4) paßt, wobei eines (1,2) des jeweils ersten oder zweiten Anschlußstücks (1,2;3) eine elastische Lippe (23) aufweist, die der Vorderfläche (32) des anderen (3) des ersten oder zweiten Anschlußstücks (1,2;3) entspricht, dadurch gekennzeichnet, daß das Stück (1,2) mit der elastischen Lippe (23) über ein Anschlußstück (1) verfügt, das aus Metall oder einer Metallegierung besteht, das bzw. die vom Schweißen her mit dem Material zusammenpaßt, aus dem das Rohrleitungsstück (T) besteht, an das es angeschweißt (12) ist, und in die Stellmutter (4) paßt, sowie über ein Endstück (2), das im axialen Halbschnitt ein liegendes V und die besagte elastische Lippe (23) bildet, wobei das besagte Endstück (2) aus einem anderen Material hergestellt ist als das Anschlußstück (1), um bessere mechanische Eigenschaften aufzuweisen, die dem Anschlußstück die notwendige Elastizität verleihen, und durch Diffusionsschweißen zu einem Stück mit dem freien Ende des Anschlußstücks (1) verbunden wird.

2. Vorrichtung gemäß Anspruch 1, dadurch gekennzeichnet, daß die elastische Lippe (23) vom zweiten Anschlußstück (1,2) gebildet wird, und daß das Anschlußstück (1) in seinem Endbereich, an dem das Endstück (2) angebracht wird, einen Aufsatzrand (10) aufweist, der den in den Vorsprung (41) der Stellmutter (4) greifenden Vorsprung (11) bildet, so daß die Verbindungsfläche (21) zwischen Anschlußstück (1) und Endstück (2) fest zusammengepreßt wird, wobei dieser Druck sich nicht auf die Verformung der Lippe (23) auswirkt, die nur vom Anschlußstück abhängt.

3. Vorrichtung gemäß Anspruch 1 oder 2, dadurch gekennzeichnet, daß Endstück (2) und Anschlußstück (1) zu einem Stück gemacht werden, und zwar durch Verbindung von zwei Metallen, mit Hilfe eines Verfahrens wie des Lichtbogenschweißens mit einer Wolframelektrode unter inertem Schutzgas (TIG-Verfahren), des Diffusionsschweißens durch isostatisches Warmpressen, durch Reibungsschweißen, Lötung, wobei die Teile der Vorrichtung so vorgesehen sind, daß die besagte Schweißnaht zwischen Endstück (2) und Anschlußstück (1) zusammengepreßt wird.

4. Vorrichtung gemäß einem der Ansprüche 1 bis 3, dadurch gekennzeichnet, daß die besagte, zur elastischen Metallippe (23) passende Vorderfläche (32) kegelstumpfförmig mit sehr offenem Winkel ist, und daß die elastische Metallippe (23) ihrerseits außen eine entsprechende Kegelstumpfform mit sehr offenen Winkel aufweist, damit eine große Kontaktfläche gewährleistet ist und die beiden Rohrleitungsstücke eine leichte Falschausrichtung aufweisen können.

5. Vorrichtung gemäß einem der Ansprüche 1 bis 3, dadurch gekennzeichnet, daß die besagte, mit der elastischen Metallippe (23) zusammenpassende Vorderfläche (32) rund ist.

6. Vorrichtung gemäß einem der Ansprüche 1 bis 5, dadurch gekennzeichnet, daß das Endstück (2) aus einer Legierung mit sehr guten mechanischen Eigenschaften besteht.

7. Vorrichtung gemäß einem der Ansprüche 1 bis 6, dadurch gekennzeichnet, daß das Anschlußstück (1) aus rostfreiem Stahl mit geringem Kohlenstoffgehalt besteht.

8. Vorrichtung gemäß einem der Ansprüche 1 bis 7, dadurch gekennzeichnet, daß die Stellmutter (4) und das erste Metallanschlußstück (3) aus einer Metallegierung mit guten mechanischen Eigenschaften bestehen.

9. Vorrichtung gemäß einem der Ansprüche 1 bis 8, dadurch gekennzeichnet, daß das Endstück (2) eine in das Innere der Rohrleitung gehende Aussparung (22) aufweist, die die elastische Lippe (23) bildet, wobei das System automatisch schließt, wenn der Innendruck den Außendruck übersteigt.

10. Vorrichtung gemäß einem der Ansprüche 1 bis 8, dadurch gekennzeichnet, daß das Endstück (2) eine zum Äußeren der Rohrleitung weisende Aussparung (22) aufweist und die elastische Lippe (23) bildet, wobei das System automatisch schließt, wenn der Außendruck den Innendruck übersteigt.

11. Vorrichtung gemäß Anspruch 6, dadurch gekennzeichnet, daß es sich bei der Legierung mit sehr guten mechanischen Eigenschaften um die Legierung NC 19 FeNb handelt.

12. Vorrichtung gemäß Anspruch 7, dadurch gekennzeichnet, daß es sich bei dem rostfreien Stahl mit geringem Kohlenstoffgehalt um den rostfreien Stahl Z2CN18-10 handelt.

13. Vorrichtung gemäß Anspruch 8, dadurch gekennzeichnet, daß es sich bei der Metallegierung mit guten mechanischen Eigenschaften um den rostfreien Stahl EZ6NCT 25-15 handelt.

## Claims

1. Junction and sealing device having a metallic lip junction for joining first and second pipe elements (T, T'), comprising a first metallic junction element (3) affixed to said first pipe element (T') and fitted with a thread (31) cooperating with a thread (42) of a tightening nut (4) which is itself fitted with a shoulder (41) and a second metallic junction element (1, 2), affixed to said second pipe element (T), and fitted on the exterior with a shoulder (11) on which the corresponding shoulder (41) of the tightening nut (4) comes to bear, one (1, 2) of the first and second junction elements (1, 2; 3) having an elastic lip (23) cooperating with a frontal face (32) provided on the other (3) of the first and second junction elements (1, 2; 3), characterized in that the element (1, 2) having an elastic lip (23) includes a nozzle element (1) made of metal or metallic alloy that is compatible, from a welding point of view, with the material of the pipe element (T) to which it is joined by welding (12), said nozzle element cooperating with said tightening nut (4), and an end piece (2) having an axial cross-section in a horizontal "V" shape to define said elastic lip (23), the said end piece (2) being made of a material different from that of the nozzle element (1) so as to provide improved mechanical characteristics, producing the necessary elasticity to the junction, and being affixed to the free end of the nozzle element (1) by diffusion welding.

2. Device according to claim 1, characterized in that the elastic lip (23) is provided on the second junction element (1, 2) and in that the nozzle element (1) has, at its terminal portion, against which is brought the end piece (2), a flange (10) defining the shoulder (11) cooperating with the shoulder (41) of said tightening nut (4) which thus ensures a compression of the junction (21) between the nozzle element (1) and the end piece (2), said compression having no effect on the deformation of the lip (23), which depends solely on the junction.

3. Device according to claim 1 or claim 2, characterized in that the end piece (2) is affixed to the nozzle element (1) by means of a bimetallic assembly through a process such as arc welding with tungsten electrode with protection by an inert gas, (TIG process), diffusion welding by hot isostatic compression, spin welding, brazing, said elements of the device being located so as to compress said weld between the end piece (2) and the nozzle element (1).

4. Device according to any one of claims 1 to 3, characterized in that said frontal face (32) cooperating with the elastic metallic lip (23) has a highly obtuse frusto-conical shape and in that the elastic metallic lip (23) itself has a frusto-conical external face corresponding to the highly obtuse angle so as to provide a large contact surface and allow a slight misalignment of the two pipe elements.

5. Device according to any one of claims 1 to 3, characterized in that said frontal face (32) cooperating with the elastic metallic lip (23) has a spherical shape.

6. Device according to any one of claims 1 to 5, characterized in that the end piece (2) is made from an alloy having high mechanical characteristics.

7. Device according to any one of claims 1 to 6, characterized in that the nozzle element (1) is made of low-carbon stainless steel.

8. Device according to any one of claims 1 to 7, characterized in that the tightening nut (4) and the first metallic junction element (3) are made of a metallic alloy having good mechanical characteristics.

9. Device according to any one of claims 1 to 8, characterized in that the end piece (2) is provided with a hollowed section (22) turned toward the inside of the pipe so as to define the elastic lip (23), the system being self-tightening when the internal pressure is greater than the external pressure.

10. Device according to any one of claims 1 to 8, characterized in that the end piece (2) features a hollow section (22) turned toward the outside of the pipe so as to define the elastic lip (23), the system being self-tightening when the external pressure is greater than the internal pressure

11. Device according to claim 6, characterized in that the alloy having high mechanical characteristics is the alloy NC 19 FeNb.

12. Device according to claim 7, characterized in that the low-carbon stainless steel is Z2CN18-10 stainless steel.

13. Device according to claim 8, characterized in that the metallic alloy having good mechanical characteristics is the EZ6NCT 25-15 stainless steel.

Fig-1

Fig-2